(19)

Europäisches
Patentamt
European
Patent Office
Office européen
des brevets

(11) **EP 2 610 986 A1**

(12) **EUROPEAN PATENT APPLICATION**

(43) Date of publication:
   **03.07.2013 Bulletin 2013/27**

(51) Int Cl.:
   **H02J 3/00** (2006.01)   **G06Q 10/06** (2012.01)

(21) Application number: **11306813.4**

(22) Date of filing: **30.12.2011**

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**

(71) Applicant: **Thomson Licensing**
   **92130 Issy-les-Moulineaux (FR)**

(72) Inventors:
   • **Massoulie, Laurent**
     **92420 Vaucresson (FR)**

   • **Keshav, Srinivasan**
     **Waterloo, Ontario N2L3G1 (CA)**
   • **Hegde, Nidhi**
     **75005 Paris (FR)**
   • **Salonidis, Theodoros**
     **75013 Paris (FR)**

(74) Representative: **Lindemann, Robert**
   **Deutsche Thomson OHG**
   **European Patent Operations**
   **Karl-Wiechert-Allee 74**
   **30625 Hannover (DE)**

(54) **A method for determining a power outage probability of an electrical power grid, a method for an adaptation of a power generation capacity and a method for determining an energy storage unit size**

(57)   A method for determining a power outage probability of an electrical power grid is suggested. The method comprising the following steps:
- dividing the time period into several time intervals,
- determining a power generation capacity and an energy storage unit size for the time period,
- determining an effective load unit demand for each time interval from a load unit demand for each time interval, respectively, wherein the load unit demand for each time interval is read-out from a database or obtained by reading out a power meter, and
- computing the power outage probability from a grid value that comprises the power generation capacity, the energy storage unit size and the effective load unit demand, wherein the grid value is optimized for its maximum value with respect to all time intervals of the time period by a processor of a data processing unit.

EP 2 610 986 A1

## Description

The invention relates to a method for determining a power outage probability of an electrical power grid, a method for an adaptation of a power generation capacity and a method for determining an energy storage unit size.

Background of the invention

Electrical power grid systems usually combine power generated by fuel-based power plants (i.e. coal, oil, gas) with variable energy sources from wind, solar and micro-hydel. Fuel-based power plants must be scaled up and down to match the rise and fall of energy production from the variable energy sources and varying demands.

Two basic methods are used to deal with changing demands. First, the fuel-based power plants can be run below their maximum output and then quickly increase the amount of generated power when needed (spinning reserve). Second, additional power plants (e.g. based on combustion gas turbines) can be brought up (in a matter of minutes) to provide a larger generating capacity. Both above methods are costly. Spinning reserve plants running below maximum output usually produce at less than their best efficiency and the expensive generating equipment at the additional power plants remain unused much of the time.

Apart from cost issues, existing power generation systems adjust the power based on the knowledge of deterministic demands provided in advance by daily or monthly usage profiles. They are not designed to handle real-time stochastic energy sources and demands that arise from grid-connected intermittent energy sources such as solar cells and wind turbines.

Grid energy storage refers to methods used to store electricity at large-scale in the electrical power grid. Electrical energy is stored during times when production from power plants exceeds consumption and the energy of the storage is used when consumption exceeds production. Energy storage has two potential benefits. First, it can increase efficiency and lower the cost of energy production. Energy storage can reduce the peak of generated power and power plants need not be drastically scaled up and down to meet momentary consumption. This has the advantage that fuel-based power plants can be operated more efficiently and easily at lower power production levels. Second, it can facilitate the use of variable energy sources and demands. Using storage, an operator of a power grid can adapt energy production to energy consumption, both of which can vary randomly over time.

Despite the high potential and increased usage of energy storage in electric power grids, it is not yet clear how to design and operate such a system in an efficient manner. A potential design approach would be to size the energy storage before system operation in order to ensure that the demand is always met.

A known method of sizing a battery consists of determining the specific demand requirements and selecting a battery size capable of supplying that load for the specified time. ANSI/IEEE 485 is the industry reference for this type of cell sizing. ANSI/IEEE 1115, IEEE recommended practice for sizing nickel-cadmium batteries for stationary applications, provides equivalent sizing information for nickel-cadmium batteries. Both methods assume a deterministic demand duty cycle and size the battery based on the highest section of the duty cycle. This yields a conservative design when the peak load of the worst duty cycle is much higher than the average and cannot be applied to the case of stochastic energy sources and / or demands.

Some research papers refer to battery sizing techniques for stochastic energy sources. Reference [1] proposes a design space approach for photovoltaic systems with energy storage, where the design space consists of all feasible power generation and storage sizes in order for the system to operate properly. Reference [2] extends [1] by proposing a design space methodology for sizing and optimizing a wind-power battery system by incorporating the uncertainty of the wind resource in the design stage using a reliability target. The methods in [1] and [2] have the following limitations. First, they both assume a priori knowledge of demands. Second, [2] assumes that wind generation power follows a Weibull distribution and the method works only for that distribution.

[1] P. Arun, R.Banerjee and S. Bandyopadhyay, "Sizing Curve for Design of Isolated Power Systems", Advances in Energy Research (AER - 2006)
[2] A. Roy, S. Kedare, S. Bandyopadhay, "Design of Wind Power Generation systems for Industrial Application Incorporating Resource Uncertainty.", Chemical Engineering Transactions, Volume 18 (2009)

Summary of the invention

It is the object of the invention to provide improved technologies for dimensioning and controlling an electrical power grid.

This object is solved by a method according to the independent claim 1, a method according to the independent claim 12 and a method according to the independent claim 13. Advantageous embodiments of the invention are the subject of dependent claims.

According to one aspect of the invention a method for determining a power outage probability of an electrical power grid, in particular a smart grid, for a time period is provided, the method comprising the following steps:

- dividing the time period into several time intervals,
- determining a power generation capacity and an energy storage unit size for the time period,
- determining an effective load unit demand for each time interval from a load unit demand for each time interval, respectively, wherein the load unit demand for each time interval is read-out from a database or obtained by reading out a power meter, and
- computing the power outage probability from a grid value that comprises the power generation capacity, the energy storage unit size and the effective load unit demand, wherein the grid value is optimized for its maximum value with respect to all time intervals of the time period by a processor of a data processing unit.

According to another aspect of the invention a method for an adaptation of a power generation capacity of an electrical power grid, in particular a smart grid, is provided, the method comprising the following steps:

a) determining the power generation capacity, an energy storage unit size and a load unit demand, wherein the power generation capacity and / or the energy unit size and / or the load unit demand are read-out from a database or obtained by reading out a power meter,
b) computing a power outage probability depending on the power generation capacity, the energy storage unit size and the load unit demand by a processor of a data processing unit,
c) comparing the power outage probability with a target reliability threshold,
d) adjusting the power generation capacity if the power outage probability is smaller than the target reliability threshold,
e) computing a new power outage probability depending on the adjusted power generation capacity, the energy storage unit size and the load unit demand by the processor of the data processing unit,
f) comparing the new power outage probability with the target reliability threshold, and
g) repeating the steps d) to f) until the new power outage probability is equal or larger than the target reliability threshold.

According to another aspect of the invention a method for determining an energy storage unit size for an electrical power grid, in particular a smart grid, comprising a power generation facility and a load unit is provided, the method comprising the steps:

a) determining a power generation capacity and a load unit demand, wherein the load unit demand is determined from a predetermined power usage profile that is read-out from a database or obtained by reading out a power meter,
b) computing a power outage probability depending on the power generation capacity, the energy storage unit size and the load unit demand by a processor of a data processing unit,
c) comparing the power outage probability with a target reliability threshold,
d) adjusting the energy storage unit size if the power outage probability is smaller than the target reliability threshold,
e) computing a new power outage probability depending on the adjusted energy storage unit size, the power generation capacity, and the load unit demand by the processor of the data processing unit,
f) comparing the new power outage probability with the target reliability threshold, and
g) repeating the steps d) to f) until the new power outage probability is equal or larger than the target reliability threshold.

The electrical power grid comprises a power generation facility with a power generation capacity, an energy storage unit, e.g. a battery, and a load unit with a demand of electrical energy, for example a household. The demand of the load unit must be matched by the power generation capacity. When the demand of the load unit is less than the power generation capacity, the remaining energy is stored in the energy storage unit. When the load unit demand exceeds the power generation capacity, the energy storage unit provides the additional capacity to serve the demand of the load unit if the energy storage unit is not empty. A power outage occurs when the load unit demand exceeds the power generation capacity and there is no electrical energy in the energy storage unit.

The method is based on a probabilistic framework for the computation of the power outage probability. It derives from the notion of an effective bandwidth used in teletraffic theory applying large deviations analysis to data buffers fed by stochastic sources in telecommunication systems. The method is based on the observation that the energy storage unit size can be modelled as a "reverse" data buffer, where the data source is mapped to a load unit demand and the buffer transmission capacity serving the source is mapped to the power generation capacity satisfying the demand.

An effective load unit demand is determined from the load unit demand for each time interval of a time period. A grid value depends on the power generation capacity, the energy storage unit size and the effective load unit demand.

The grid value is optimized for its maximum value for all time intervals of the time period. Due to the optimization of the grid value, a particular distribution of the power generation capacity and / or the load unit demand does not have to be assumed. The power outage probability is then computed from the grid value.

In some situations it might be necessary to react to a varying load unit demand by adapting the power generation capacity. If the power outage probability for a given set of the power generation capacity, the energy storage unit size and the load unit demand is smaller than a target reliability threshold, the power generation capacity has to be adjusted, for example increased, to avoid a power outage. Preferably, the load unit demand is provided as a real-time demand measured by a meter. This allows an operator of the power grid to adjust the power generation capacity on short notice and assure that the demand is met. By repeated adjustment of the power generation capacity and comparison of the corresponding power outage probability a new power generation capacity can be determined that assures that the power outage probability is equal or larger than the target reliability threshold. In a preferred embodiment, adjusting the power generation capacity comprises decreasing the capacity if the corresponding power outage probability is larger than the target reliability threshold. Hereby, the minimum power outage capacity that relates to the power outage probability that is equal to the target reliability threshold can be determined.

Further, in a planning stage for a new electrical power grid or an upgrade of an existing power grid the size of the energy storage unit can be determined based an the expected load unit demand and the power generation capacity. The load unit demand is provided from a predetermined power usage profile and it is assumed that this profile is valid in the future. By computing the power outage probability for some values of the energy storage unit size and comparing the probability with a target reliability threshold, the energy storage unit size sufficient for the power grid at hand can be determined.

Each of the above methods can be executed by the data processing unit that is connected to the database. Preferably, the processor of the data processing unit executes each step of the above methods, respectively.

In a preferred embodiment, the load unit demand comprises several load unit demand distributions for each time interval, determining the effective load unit demand comprises determining an effective load unit demand distribution for each time interval from each load unit demand distribution, respectively, wherein the load unit demand distributions for each time interval are read-out from the database or obtained by reading out a power meter, and a multiplex value is determined that aggregates the several load unit demand distributions, wherein the grid value comprises the multiplex value and is further optimized for its minimum value with respect to the multiplex value by the processor of the data processing unit. The multiplex value relates to an aggregate demand of several load units in the power grid.

According to a further embodiment, the load unit demand distributions are stochastic distributions. In contrast to the prior art, no specific form of the load unit demand distributions is expected. Instead, arbitrary stochastic distributions are used to determine the power outage probability. Hereby, a huge flexibility of demand distributions is provided. For example, the load unit demand distributions may refer to the real demands of households, office buildings, public buildings and / or industrial facilities.

In still another preferred embodiment, the load unit demand distributions are provided as predetermined power usage profiles. The predetermined power usage profiles can be measured over a certain time period, for example. Using known profiles the power outage probability can be determined for similar circumstances in the future. For example, the demand distributions of several households of a district are measured over winter. Assuming that the demand of each household will be the same in winter, the power outage probability can be determined for the next winter for the case that additional households are built in the district.

In a further embodiment, the power usage profiles are related to a daily, weekly, monthly or yearly power usage.

In still a further embodiment of the invention, the load unit demand distributions are provided as measurement values that are measured in real-time and provided to the database by a power meter. Real-time measurement of the demand distributions allows an identification of potential problems in providing electrical energy. If the power outage probability becomes too large, indicating that a reliable energy supply can not be provided, a grid operator can react by increasing the power generation capacity, for example. Preferably, each load unit demand distribution is provided by a power meter that is associated to the respective load unit.

In a preferred embodiment, the measurement values are measured at each load unit or at an energy storage unit.

In another preferred embodiment, the power generation capacity comprises a stochastic power generation distribution. Hereby, the power generation capacity of intermittent energy sources, e.g. solar cells or wind turbines, can be taken into account.

According to a further embodiment, the power generation capacity comprises several individual power generation capacities. An energy supply by several power plants connected to the electrical power grid can be considered.

In still a preferred embodiment, the power generation capacity refers to at least one power generation plant of the following group: nuclear power plant, coal power plant, oil power plant, gas power plant, solar power plant, hydro power plant and wind power plant.

According to another further embodiment, the energy storage unit size comprises several individual energy storage unit sizes. Depending on the size of the electrical power grind and / or on specific regional circumstances the energy storage unit can be provided as one (large) unit or as several (smaller) units.

Description of preferred embodiments of the invention

Following, the invention will be described in further detail, by way of example.

An electrical power grid, in particular a smart grid, is considered where a power generation facility (PGF) distributes power to several load units (LUs), such as homes or industrial facilities, using a battery which serves as an energy storage unit (ESU). The LUs create electricity demands that must be matched by the PGF. When the aggregate demand of the LUs is less than the power generation capacity, the remaining energy is stored in the ESU. When the aggregate demand exceeds the capacity, the ESU (if non-empty) provides the additional capacity to serve the excess demand of the LUs. A power outage (at all LUs) occurs when the demands exceed the generation capacity and the ESU has no energy left.

A method is provided to determine a power outage probability based on the demands of a number of N LUs, the storage size B of the ESU and the power generation capacity C of the PGF. The method comprises the following steps:

First, the ESU considers LU demand distributions during a time period $T$, divided in $T/t$ smaller time intervals of duration $t$. During each time interval $[(i-1)t, it]$, the demand $I_j([i-1)t, it])$, $i=1,...,T/t$ of each LU $j$ is determined. The demand distributions of the LUs are either provided in advance (e.g. as daily power usage profiles) or they are measured in real-time using smart grid power meter technologies, for example a meter. If the LU demands are measured they can either be measured and provided by the LUs to the ESU or measured at the ESU.

Then, for the time period $T$, the power outage probability $P(outage)$ is computed as a function of the $N$ demands $I_j$, the ESU size $B$ and the power generation capacity $C$ based on the following formula:

$$P(outage) = \exp(-IN) \; .$$

$$(1)$$

The exponent $-I$ in equation (1) is computed by solving the following optimization problem:

$$-I = J^* = \max_t \min_s J(s,t) \; ,$$

$$(2)$$

wherein

$$J(s,t) = st \sum_{j=1}^{N} n_j \, a_j(s,t) - s(B + Ct) \; .$$

$$(3)$$

Similar to the notion of an effective bandwidth in communication networks, the quantity $a_j(s,t)$ in equation (3) can be viewed as an "effective demand" of each LU $j$. The effective demand takes values between a peak demand and an average demand of LU $j$. The effective demand can be computed using the following equation:

$$a_j(s,t) = \frac{1}{st}\log\left[\frac{t}{T}\sum_{i=1}^{T/t}\exp(sl_j((i-1)t, it))\right].$$

$$(4)$$

The optimization problem defined by equation (2) is solved by solving two separate optimization problems.

First, for a fixed *t* the value *s\** of *s* that minimizes *J(s,t)* is determined:

$$J^*(t) = \min_s J(s,t).$$

$$(5)$$

Second, the value *t\** of *t* that maximizes *J\*(t)* is determined:

$$J^* = \max_t J^*(t).$$

$$(6)$$

Both equations (5) and (6) can be solved using numerical techniques which search in the space of the parameters *s* and *t*, for example a brute force enumeration. The parameters *s* and *t* have the following physical interpretations. The parameter *t\** represents the most likely time duration until the ESU will become empty and a power outage occurs. The parameter s corresponds to the way the demands of the N LUs are multiplexed and create the aggregate demand that depletes the energy of the energy storage unit.

With the method to determine the power outage probability two fundamental design and control issues of (smart) electrical power grids can be addressed: a real-time adaptation of a power generation capacity and a sizing of an energy storage unit.

The above steps are repeated for different values of B, C and time periods T to yield several values of *P(outage)*. The output of this step is a system design space, namely a set of graphs which quantify the relationship between these quantities and aid in controlling the power generation in real time or sizing the ESU.

Examples of applications of the above method are as follows.

a) Real-time power generation adaptation

It is possible to determine how the power generation capacity *C* at the PGF has to be adjusted based on the ESU size *B* and real-time measurements of the LU demands *l_j*.

It is supposed that an electrical power system operates with a given energy storage unit size *B* and the demands of the *N* LUs are provided in real time using smart meter technology. The demands are measured for each period *T* and a value of *P(outage)* is determined based on the steps above. If *P(outage)* drops below a target reliability threshold, the power generation capacity *C* is adjusted, for example increased, and a new power outage probability is computed. The new *P(outage)* is compared with the target reliability threshold and, if necessary, the power generation capacity is adjusted again. The steps are repeated until the new power outage probability is equal or larger than the target reliability threshold. In a further refinement, the power generation capacity can be adjusted, for example decreased, and a new power outage probability be determined that is actually equal to the target reliability threshold. Hereby, the minimum increase in the power generation capacity C in order to match the demands and guarantee the target reliability threshold is determined.

b) ESU sizing

It can be determined which ESU size has to be selected for a (smart) electrical power grid in order to guarantee a power outage probability, given a PGF generation capacity and LU demands.

An ESU shall be added to the power grid to support shared storage and reduce the peak generation power and corresponding cost. Using predetermined demand profiles of different periods $T$, for example daily, weekly, monthly or yearly profiles, it is possible to compute all pairs $B$ and $C$ that yield a desired buffer overflow probability. In this way, it is possible to make an educated decision as to which size $B$ would be most cost effective for the system at hand.

After the ESU size is determined, the size of the battery $B$ should be increased depending on the aging and temperature where the battery is expected to operate. For example, a factor of 1.25 is usually applied to account for the fact that the battery is unusable at 80% of its capacity. In addition, the temperature factor can be easily determined from tables provided by the battery manufacturer specifications.

**Claims**

1. A method for determining a power outage probability of an electrical power grid, in particular a smart grid, for a time period, the method comprising the following steps:

   - dividing the time period into several time intervals,
   - determining a power generation capacity and an energy storage unit size for the time period,
   - determining an effective load unit demand for each time interval from a load unit demand for each time interval, respectively, wherein the load unit demand for each time interval is read-out from a database or obtained by reading out a power meter, and
   - computing the power outage probability from a grid value that comprises the power generation capacity, the energy storage unit size and the effective load unit demand, wherein the grid value is optimized for its maximum value with respect to all time intervals of the time period by a processor of a data processing unit.

2. The method according to claim 1, **characterized in that** the load unit demand comprises several load unit demand distributions for each time interval, determining the effective load unit demand comprises determining an effective load unit demand distribution for each time interval from each load unit demand distribution, respectively, wherein the load unit demand distributions for each time interval are read-out from the database, and a multiplex value is determined that aggregates the several load unit demand distributions, wherein the grid value comprises the multiplex value and is further optimized for its minimum value with respect to the multiplex value by the processor of the data processing unit.

3. The method according to claim 2, **characterized in that** the load unit demand distributions are stochastic distributions.

4. The method according to claim 2 or 3, **characterized in that** the load unit demand distributions are provided as predetermined power usage profiles.

5. The method according to claim 4, **characterized in that** the power usage profiles are related to a daily, weekly, monthly or yearly power usage.

6. The method according to claim 2 or 3, **characterized in that** the load unit demand distributions are provided as measurement values that are measured in real-time and provided to the database by a meter.

7. The method according to claim 6, **characterized in that** the measurement values are measured at each load unit or at an energy storage unit.

8. The method according to any one of the preceding claims, **characterized in that** the power generation capacity comprises a stochastic power generation distribution.

9. The method according to any one of the preceding claims, **characterized in that** the power generation capacity comprises several individual power generation capacities.

10. The method according to any one of the preceding claims, **characterized in that** the power generation capacity refers to at least one power generation plant of the following group: nuclear power plant, coal power plant, oil power plant, gas power plant, solar power plant, hydro power plant and wind power plant.

11. The method according to any one of the preceding claims, **characterized in that** the energy storage unit size comprises several individual energy storage unit sizes.

12. A method for an adaptation of a power generation capacity of an electrical power grid, in particular a smart grid, the method comprising the following steps:

a) determining the power generation capacity, an energy storage unit size and a load unit demand, wherein the power generation capacity and / or the energy unit size and / or the load unit demand are read-out from a database_or obtained by reading out a power meter,
b) computing a power outage probability depending on the power generation capacity, the energy storage unit size and the load unit demand according to the method according to any one of the claims 1 to 11 by a processor of a data processing unit,
c) comparing the power outage probability with a target reliability threshold,
d) adjusting the power generation capacity if the power outage probability is smaller than the target reliability threshold,
e) computing a new power outage probability depending on the adjusted power generation capacity, the energy storage unit size and the load unit demand according to the method according to any one of the claims 1 to 11 by the processor of the data processing unit,
f) comparing the new power outage probability with the target reliability threshold, and
g) repeating the steps d) to f) until the new power outage probability is equal or larger than the target reliability threshold.

13. A method for determining an energy storage unit size for an electrical power grid, in particular a smart grid, comprising a power generation facility and a load unit, the method comprising the steps:

a) determining a power generation capacity and a load unit demand, wherein the load unit demand is determined from a predetermined power usage profile that is read-out from a database,
b) computing a power outage probability depending on the power generation capacity, the energy storage unit size and the load unit demand according to the method according to any one of the claims 1 to 11 by a processor of a data processing unit,
c) comparing the power outage probability with a target reliability threshold,
d) adjusting the energy storage unit size if the power outage probability is smaller than the target reliability threshold,
e) computing a new power outage probability depending on the adjusted energy storage unit size, the power generation capacity, and the load unit demand according to the method according to any one of the claims 1 to 11 by the processor of the data processing unit,
f) comparing the new power outage probability with the target reliability threshold, and
g) repeating the steps d) to f) until the new power outage probability is equal or larger than the target reliability threshold.

Europäisches
Patentamt
European
Patent Office
Office européen
des brevets

# EUROPEAN SEARCH REPORT

Application Number

EP 11 30 6813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/019621 A1 (IKUMA HITOSHI [JP] ET AL) 27 January 2005 (2005-01-27) * paragraphs [0011] - [0014] * | 1 | INV. H02J3/00 G06Q10/06 |
| X | SU YOULI ET AL.: "Efficiency of Micro Grid with Storage Battery in Reliablility, Economy and Environment Assessments", INTERNATIONAL JPOURNAL OF ELECTRICAL AND POWER ENGINEERING, vol. 3, no. 3, 30 December 2009 (2009-12-30), pages 154-162, XP002676416, ISSN: 1990-7958 * page 158 * | 1 | |
| X | SEBASTIEN LANNEZ ET AL: "Optimizing Outages and Hydro Strategy to Reduce Load-Shedding in Bangladesh: Strategic Unit Scheduling Software", GLOBAL HUMANITARIAN TECHNOLOGY CONFERENCE (GHTC), 2011 IEEE, IEEE, 30 October 2011 (2011-10-30), pages 143-147, XP032074378, DOI: 10.1109/GHTC.2011.72 ISBN: 978-1-61284-634-7 * page 145 * | 1 | |
| X | Omid Ardakanian, S. Keshav, and Catherine Rosenberg: "Sizing the Electrical Grid", University of Waterloo, Technical Report CS-2011-18 , 25 July 2011 (2011-07-25), pages 1-12, XP002676421, Retrieved from the Internet: URL:www.cs.uwaterloo.ca/research/tr/2011/CS-2011-18a.pdf [retrieved on 2012-05-22] * the whole document * | 1 | |

TECHNICAL FIELDS
SEARCHED (IPC)

H02J
G06Q

The present search report has been drawn up for all claims

| Place of search | Date of completion of the search | Examiner |
|---|---|---|
| Munich | 23 May 2012 | Baur, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 30 6813

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2012

| Patent document cited in search report | Publication date | Patent family member(s) | Publication date |
|---|---|---|---|
| US 2005019621 A1 | 27-01-2005 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. ROY ; S. KEDARE ; S. BANDYOPADHAY.** Design of Wind Power Generation systems for Industrial Application Incorporating Resource Uncertainty. *Chemical Engineering Transactions,* 2009, vol. 18